# EUROPÄISCHE PATENTSCHRIFT

(11) **EP 4 263 292 B1**
(45) Veröffentlichungstag und Bekanntmachung des Hinweises auf die Patenterteilung: **05.03.2025**
(21) Anmeldenummer: 21831018.3
(22) Anmeldetag: 08.12.2021
(51) Int. Cl.: B60R 13/04, B60J 5/04

(54) **KLAPPE EINES KRAFTFAHRZEUGS**
FLAP OF A MOTOR VEHICLE
AILERON DE VÉHICULE AUTOMOBILE

(30) Priorität: 15.12.2020 DE 102020215925
(43) Veröffentlichungstag der Anmeldung: 25.10.2023
(73) Patentinhaber: Brose Fahrzeugteile SE & Co. Kommanditgesellschaft, Bamberg, 96052 Bamberg (DE)
(72) Erfinder: WÜST, Michael, 91735 Muhr am See (DE); TOPF, Carsten, 97453 Schonungen (DE)
(74) Vertreter: FDST Patentanwälte
(86) Internationale Anmeldenummer: PCT/EP2021/084693
(87) Internationale Veröffentlichungsnummer: WO 2022/128656

(56) Entgegenhaltungen:
- DE-A1- 102014 010 383
- DE-A1- 19 745 309
- DE-U1- 202020 104 648
- US-A1- 2019 128 040

## Beschreibung

Die Erfindung betrifft eine Klappe eines Kraftfahrzeugs. Die Klappe weist einen Klappenkörper auf, an dem außenseitig eine Zierleiste angebunden ist.

Kraftfahrzeuge weisen üblicherweise mehrere Klappen auf, durch die ein Beladen und/oder ein Einstieg in einen Innenraum des Kraftfahrzeugs ermöglicht ist. Derartige Klappen sind somit beispielsweise eine Heckklappe, eine Motorhaube oder Seitentüren. Jede dieser Klappen weist üblicherweise einen Klappenkörper auf, der beweglich an einer Karosserie des Kraftfahrzeugs gelagert ist. Der Klappenkörper soll meist vergleichsweise robust ausgestaltet sein, und ist daher meist aus einem Metall gefertigt. Um ein optisch ansprechendes/reizvolles Ansprechen zu realisieren, und um eine Korrosion zu verhindern, ist der Klappenkörper meist lackiert. Falls bei einem Öffnen der Klappe der Klappenkörper gegen ein Hindernis verbracht wird, ist es möglich, dass einerseits der Klappenkörper verformt wird. Andererseits ist es möglich, dass der Lack zumindest teilweise beschädigt wird, sodass eine Korrosion möglich ist. Beide Male ist die Reparatur vergleichsweise kostenintensiv.

Zur Behebung des genannten Mangels ist üblicherweise eine Zierleiste vorgesehen, die außenseitig an dem jeweiligen Klappenkörper angeordnet ist. Die Zierleiste steht meist bezüglich des jeweiligen Klappenkörpers über, sodass bei einem Verbringen der Klappe gegen ein Hindernis zuerst ein Kontakt mit der Zierleiste erfolgt, mittels derer somit der Klappenkörper geschützt ist. Die Zierleiste ist meist aus einem Kunststoff gefertigt, der vergleichsweise elastisch ist. Daher tritt bei einem vergleichsweise sanften Verbringen der Klappe gegen das Hindernis keine Beschädigung auf. Sofern dennoch eine Beschädigung der Klappe erfolgt, ist lediglich ein Austausch der Zierleiste erforderlich, was lediglich vergleichsweise kostengünstig ist.

In zunehmendem Maße erfolgt zudem eine Überwachung der Umgebung des Kraftfahrzeugs mittels eines Sensors auf Objekte. Dies dient beispielsweise beim Rangieren des Kraftfahrzeugs, sodass ein Verbringen des Kraftfahrzeugs gegen das Objekt vermieden wird. Auch wird üblicherweise der Verstellbereich der Klappen mittels eines entsprechenden Sensors überwacht, damit sichergestellt werden kann, dass sich darin kein Hindernis befindet, wenn die Klappe bewegt wird.

Als ein derartiger Sensor wird beispielsweise ein kapazitiver Sensor verwendet. Bei diesem ist jedoch eine Ortsauflösung vergleichsweise gering. Eine Alternative hierzu ist die Überwachung mittels einer Kamera, wobei der ungestörte Betrieb eine entsprechende Ausleuchtung der Umgebung voraussetzt. Auch stört eine Verschmutzung der Kamera deren Betrieb vergleichsweise stark. Eine bevorzugte Variante ist daher die Verwendung eines Radarsensors, der im Wesentlichen witterungsunabhängig mit einer vergleichsweise genauen Ortsauflösung ein entsprechendes Hindernis erfassen kann. Auch ist hierbei ein Betrieb des Sensors für den Nutzer nicht ersichtlich, sodass keine Belästigung des Nutzers erfolgt.

Da jedoch die von dem Radarsensor ausgesandten und zu empfangenden Radarwellen das Metall des Klappenkörpers nicht vollständig durchdringen können, oder zumindest vergleichsweise stark abgemildert werden, ist meist in dem Klappenkörper ein Ausschnitt vorgesehen, durch den die Radarwellen ein- und austreten können. Damit hierbei kein Eintritt von Fremdpartikeln in das Kraftfahrzeug oder ein übermäßiger Luftaustausch erfolgt, ist der Ausschnitt meist mit einem für Radarwellen transparenten Material verschlossen, beispielsweise einem Kunststoff. Damit dies realisiert wird, und keine ungewünschten Auswirkungen auf die Radarwellen ausgeübt werden, werden die Fertigungstoleranzen vergleichsweise gering gewählt. Die auf diese Weise zusammengesetzte Klappenkörper ist meist vollständig lackiert, sodass für einen Nutzer der Ausschnitt nicht sichtbar ist. Infolgedessen sind Herstellungskosten vergleichsweise hoch.

In US 2019/0128040 A1 ist ein Detektorsystem und ein Verfahren zum Betreiben des Detektorsystems gezeigt. Das Detektorsystem umfasst eine Versorgungseinheit und mindestens einen Sensor zur Erfassung von mindestens einem Objekt und einer Bewegung. Eine Kommunikationseinheit ist elektrisch mit der Versorgungseinheit verbunden, um mit einer Anzahl von Fahrzeug-Systemcontrollern zu kommunizieren. Ein Mikroprozessor ist in einer Anzahl von Modi betreibbar und ist mit der Versorgungseinheit und dem mindestens einen Sensor und der Kommunikationseinheit verbunden.

DE 20 2020 104648 U1 zeigt ein Fahrzeuganbauteil mit einem integrierten Sensormodul. Das Sensormodul umfasst eine Abdeckung mit einer Außenseite und einer Innenseite, wobei die Abdeckung zumindest abschnittsweise aus einem transparenten thermoplastischen Kunststoff besteht. Ferner umfasst das Sensormodul ein Trägerteil, das an der Innenseite der Abdeckung angeordnet ist, und eine Einbuchtung der Abdeckung und des Trägerteils, die gegenüber der Außenseite der Abdeckung zurückversetzt ist.

Der Erfindung liegt die Aufgabe zugrunde, eine besonders geeignete Klappe eines Kraftfahrzeugs anzugeben, wobei vorteilhafterweise Herstellungskosten reduziert sind.

Erfindungsgemäß wird diese Aufgabe durch die Merkmale des Anspruchs 1 gelöst. Vorteilhafte Weiterbildungen und Ausgestaltungen sind Gegenstand der jeweiligen Unteransprüche.

Die Klappe ist ein Bestandteil eines Kraftfahrzeugs, das insbesondere landgebunden ist. Das Kraftfahrzeug ist zweckmäßigerweise im Wesentlichen frei auf einer Fahrbahn positionierbar und somit nicht schienengeführt. Zum Beispiel ist das Kraftfahrzeug ein Nutzkraftwagen, wie ein Lastkraftwagen (Lkw) oder Bus. Besonders bevorzugt jedoch ist das Kraftfahrzeug ein Personenkraftwagen (Pkw).

Die Klappe weist einen Klappenkörper auf. Der Klappenkörper ist insbesondere flächig ausgestaltet und dient dem Verschließen einer Öffnung in einer Karosserie des Kraftfahrzeugs. Hierfür ist der Klappenkörper geeignet, insbesondere vorgesehen und eingerichtet. Insbesondere ist es dabei möglich, den Klappenkörper und somit die Klappe in eine geöffnete und auch in eine geschlossene Position zu verbringen. Beispielsweise ist der Klappenkörper aus am einzigen Bauteil erstellt, das geeigneterweise außer Metall gefertigt ist, oder der Klappenkörper umfasst mehrere einzelne Bauteile. Der Klappenkörper ist im Montagezustand insbesondere beweglich an der Karosserie des Kraftfahrzeugs gelagert, beispielsweise schwenkbeweglich oder zumindest teilweise transversal verschiebbar. Hierfür umfasst die Klappe zweckmäßigerweise eine entsprechende Lagereinheit, beispielsweise ein Scharnier. Eine derartige Klappe ist somit insbesondere eine Heccklappe, eine Motorhaube oder zum Beispiel eine Tür, die beispielsweise schwenkbeweglich gelagert ist. Alternativ hierzu ist die Klappe eine Schiebetür.

Die Klappe umfasst ferner eine Zierleiste, wie eine die außenseitig an dem Klappenkörper angebunden ist. Mit anderen Worten befindet sich die Zierleiste auf der Seite des Klappenkörpers, die den weiteren Bestandteilen des Kraftfahrzeugs abgewandt ist, und die zumindest nicht in einen Innenraum des Kraftfahrzeugs ragt, wenn sich die Klappe im geschlossenen Zustand befindet. Vorzugsweise bildet somit die Zierleiste zumindest teilweise eine äußere Begrenzung des Kraftfahrzeugs. Die Zierleiste ist zweckmäßigerweise aus einem Kunststoff gefertigt und beispielsweise in der gleichen Farbe lackiert wie der Klappenkörper. Insbesondere ist die Zierleiste an dem Klappenkörper lösbar befestigt, beispielsweise mittels Clipsen.

Von der Zierleiste ist eine Radarsensoreinheit aufgenommen, die ein Gehäuse umfasst. Somit liegt die Radarsensoreinheit als einzelne Baueinheit vor, wobei mittels Montage des Gehäuses die Radarsensoreinheit montiert wird. Das Gehäuse ist vollständig von der Zierleiste aufgenommen und somit mittels der Zierleiste umschlossen. Infolgedessen ist die Radarsensoreinheit mittels der Zierleiste geschützt, sodass es nicht erforderlich ist, das Gehäuse der Radarsensoreinheit vergleichsweise robust auszugestalten. Infolgedessen sind Herstellungskosten reduziert.

Da die Radarsensoreinheit zudem von der Zierleiste aufgenommen ist, ist diese optisch von außerhalb des Kraftfahrzeugs nicht wahrnehmbar, weswegen ein optischer Eindruck verbessert ist. Ferner befindet sich die Radarsensoreinheit außerhalb des Kraftfahrzeugs, sodass die mittels der Radarsensoreinheit abgegebenen und empfangenen Radarwellen nicht durch den Klappenkörper beeinträchtigt oder verfälscht werden. Somit ist ein Betrieb der Radarsensoreinheit vereinfacht, und diese kann mit einer vergleichsweise geringen Leistung betrieben werden. Auch ist eine Genauigkeit der Erfassung von Objekten mittels der Radarsensoreinheit auf diese Weise verbessert. Hierbei ist es nicht erforderlich, den Klappenkörper entsprechend anzupassen, weswegen Herstellungskosten reduziert sind.

Da die Radarsensoreinheit aufgrund der Position der Zierleiste auch vergleichsweise weit außen angeordnet ist, also außerhalb eines Innenraums des Kraftfahrzeugs und über den Klappenkörper sowie sonstige Bestandteile der Karosserie, die beispielsweise aus Metall gefertigt sind, nach außen übersteht, ist zudem ein möglicher Überwachungsbereich vergrößert. Infolgedessen ist es möglich, mittels einer einzigen einen Radarsensoreinheit vergleichsweise großen Bereich zu überwachen, und es sind nicht mehrere derartige Radarsensoreinheit erforderlich. Somit sind weiter Herstellungskosten reduziert.

Die Radarsensoreinheit ist beispielsweise mit einer Frequenz von im Wesentlichen 18 GHz betrieben. Somit werden bei Betrieb Radarwellen mit einer Frequenz von im Wesentlichen 18 GHz ausgesandt. Besonders bevorzugt jedoch ist die Radarsensoreinheit mit einer Frequenz zwischen 78 GHz und 81 GHz betrieben. Folglich werden bei Betrieb Radarwellen mit einer Frequenz zwischen 78 GHz und 81 GHz ausgesandt/empfangen. Aufgrund der erhöhten Frequenz sind eine Bandbreite und auch eine Entfernungsauflösung erhöht. In einer Weiterbildung sind von der Zierleiste mehrere Radarsensoreinheiten aufgenommen, sodass eine Ortsauflösung verbessert ist. Beispielsweise ist die Radarsensoreinheit thermisch mit dem Klappenkörper kontaktiert. Somit erfolgt eine Entwärmung der Radarsensoreinheit über den Klappenkörper, was eine Betriebssicherheit und Zuverlässigkeit erhöht.

Die Radarsensoreinheit dient in einer Ausführungsform dem Einklemmschutz. Alternativ dient die Radarsensoreinheit bei Betrieb der Überwachung eines Verstellbereichs der Klappe. Vorzugsweise wird mittels der Radarsensoreinheit bei Betrieb überwacht, ob die Klappe, insbesondere der Klappenkörper und/oder die Zierleiste, gegen einen Bordstein oder ein sonstiges Hindernis verschwenkt wird. Sofern ein Bordstein oder dergleichen identifiziert wird, wird insbesondere eine Warnung ausgegeben. Sofern die Klappe elektromotorisch verstellt wird, wird in diesem Fall bevorzugt der Elektromotor stillgesetzt und somit die Verstellung beendet. Somit dient die Radarsensoreinheit dem Kollisionsschutz. Alternativ erfolgt bei Betrieb mittels der Radarsensoreinheit eine Erkennung einer Geste oder dergleichen, die ein Benutzer des Kraftfahrzeugs durchführt. Insbesondere wird in Abhängigkeit der erfassten Geste bei Betrieb ein Assistenzsystem des Kraftfahrzeugs aktiviert, beispielsweise der etwaige Elektromotor, sodass der Klappenkörper nachfolgend verschwenkt wird. In einer weiteren Alternative dient die Radarsensoreinheit der Überwachung der Umgebung des Kraftfahrzeugs, sodass das Kraftfahrzeug bei einem Rangieren in nicht gegen ein mittels der Radarsensoreinheit erfasstes Hindernis verbracht wird. Zusammenfassen und dient die Radarsensoreinheit somit entweder der Umfelderkennung, oder der Kollisionsvermeidung, insbesondere bei automatisch angetriebenen Klappen, wie Scharniertüren (Seitentüren, Heckklappen, Frunk-Klappen) oder Schiebetüren. Vorzugsweise ist die Radarsensoreinheit zur Überwachung eines Bereichs vorgesehen und eingerichtet, der sich zwischen 1 m und bis zu 0 m von dem Kraftfahrzeug wegerstreckt. Insbesondere ist hierbei eine abgegebene Leistung entsprechend angepasst. Somit ist einerseits ein Energiebedarf verringert. Andererseits ist eine übermäßige Strahlenbelastung vermieden.

Vorzugsweise ist die Form des Gehäuses ähnlich der Form der Zierleiste, sodass die Aufnahme des Gehäuses durch die Zierleiste vereinfacht ist. So weist das Gehäuse insbesondere eine vergleichsweise längliche Ausformung auf. Zweckmäßigerweise ist das Gehäuse vergleichsweise flach und länglich ausgestaltet, was eine Montage vereinfacht. So ist vorzugsweise die horizontale Ausdehnung des Gehäuses, die von einem Kraftfahrzeug weg gerichtet ist, vergleichsweise gering und beispielsweise geringer als 1 cm oder 0,5 cm. In der anderen horizontalen Richtung, die senkrecht hierzu ist, ist dafür die Ausdehnung vergleichsweise groß und beispielsweise größer als 2 cm, 5 cm oder 10 cm. Somit ist einerseits genügend Volumen innerhalb des Gehäuses für die einzelnen Bestandteile der Radarsensoreinheit bereitgestellt. Andererseits ist auf diese Weise eine Abänderung von bestehenden Zierleisten oder zumindest deren Außenabmessungen nicht erforderlich.

Vorzugsweise weist die Zierleiste eine Aufnahme auf, die für die Radarsensoreinheit, insbesondere das Gehäuse, vorgesehen und eingerichtet ist. Die Aufnahme ist vorzugsweise als Aussparung ausgestaltet und beispielsweise umfangsseitig geschlossen. Besonders bevorzugt jedoch ist die Aussparung topfförmig, sodass eine Montage des Gehäuses an der Zierleiste vereinfacht ist. So ist es geeigneterweise möglich, die Radarsensoreinheit nach Fertigung der Zierleiste in die Aussparung einzulegen.

In einer Variante ist die Radarsensoreinheit an dem Klappenkörper befestigt, vorzugsweise mittels einer Haltekonstruktion. Die Radarsensoreinheit ist mittels der Zierleiste verdeckt. Hierfür liegt die Radarsensoreinheit in der Aufnahme ein und ist somit von der Zierleiste aufgenommen. Dabei ist die Radarsensoreinheit beispielsweise lose in der Aufnahme angeordnet. Mit anderen Worten ist die Radarsensoreinheit nicht direkt an der Zierleiste befestigt.

Beispielsweise ist die Radarsensoreinheit lösbar an der Zierleiste befestigt und zum Beispiel mit dieser verschraubt oder verclipst. Auf diese Weise ist ein Austausch einer fehlerhaften Radarsensoreinheit oder einer beschädigten Zierleiste jeweils separat möglich, ohne dass das jeweils andere Teil ebenfalls ausgetauscht werden müsste.

Alternativ ist das Gehäuse mit der Zierleiste vergossen. Auf diese Weise ist ein Eindringen von Schmutzpartikeln oder Flüssigkeiten in das Gehäuse vermieden, was ansonsten eine Funktionssicherheit gefährden könnte. Zudem ist auf diese Weise der Verbund aus der Zierleiste und der Radarsensoreinheit vergleichsweise robust ausgestaltet. So wird mittels der Zierleiste in diesem Fall das Gehäuse stabilisiert, weswegen das Gehäuse selbst vergleichsweise filigran ausgestaltet werden kann, was ein Gewicht und Herstellungskosten reduziert. Alternativ zum Vergießen ist das Gehäuse beispielsweise mit der Zierleiste verklebt. Somit ist eine Herstellung vereinfacht, wenn auch eine Stabilität im Vergleich zum Vergießen geringfügig verringert ist.

Beispielsweise weist das Gehäuse die gleiche Ausrichtung wie die Zierleiste oder der Klappenkörper im Bereich der Anbindung der Zierleiste auf. Besonders bevorzugt jedoch ist das Gehäuse bezüglich des Klappenkörpers geneigt, den dieses im Bereich der Zierleiste aufweist. Mit anderen Worten schließen das Gehäuse und der Klappenkörper zueinander einen Winkel ein. Hierbei ist es möglich, dass der Klappenkörper beispielsweise unterschiedliche Ausrichtungen aufweist und zum Beispiel gewölbt ist. Somit ist es möglich, dass das Gehäuse und der Klappenkörper zwar zueinander parallel angeordnet sind, jedoch in einem von der Zierleiste beabstandeten Bereich. Aufgrund der Neigung des Gehäuses bezüglich des Klappenkörpers erfolgt eine verbesserte Überwachung der Umgebung des Kraftfahrzeugs, und es ist nicht erforderlich, den Montageort der Zierleiste auf das Gehäuse und somit die Radarsensoreinheit abzustimmen. Aufgrund des geneigten Gehäuses ist eine Abstrahl- und Empfangsrichtung der Radarsensoreinheit anpassbar und vorzugsweise im Wesentlichen horizontal ausgerichtet, sodass eine etwaige sogenannte Hauptkeule im Wesentlichen horizontal ausgerichtet ist. Alternativ hierzu ist die Hauptkeule, also der Bereich der erhöhten Abstrahlintensität/Sensitivität, bezüglich der Horizontal nach oben verschwenkt, sodass die Zierleiste auch in einem vergleichsweise niedrigen Bereich des Klappenkörpers angebracht werden kann. Somit kann mittels der Zierleiste ein Verbringen des Klappenkörpers gegen ein vergleichsweise niedriges Hindernis abgefangen werden.

Beispielsweise ist das Gehäuse aus einem Kunststoff gefertigt und zum Beispiel ein Spritzgussteil. Hierbei ist die Dicke der Wände des Gehäuses in einer Ausführungsform überall gleich. Besonders bevorzugt jedoch ist das Gehäuse auf der dem Klappenkörper abgewandten Seite mittels einer Folie gebildet. Somit ist die Dicke dieser Wand vergleichsweise gering und geringer als 0,1 mm oder 0,05 mm. Aufgrund der vergleichsweise geringen Dicke ist eine Durchdringung mittels der Radarwellen im Wesentlichen nicht beeinträchtigt, was einen Betrieb der Radarsensoreinheit vereinfacht. Auch ist auf diese Weise eine Ausdehnung der Radarsensoreinheit, die von dem Klappenkörper weggerichtet ist, vergleichsweise gering, sodass eine Dicke der Zierleiste, also der Überstand der Zierleiste über den Klappenkörper, vergleichsweise gering gewählt werden kann. Folglich ist einerseits ein Luftwiderstand verringert. Andererseits ist ein ansprechendes Äußeres realisiert. Aufgrund der Folie wird dabei jedoch vor Montage ein Eindringen von Fremdpartikeln in das Gehäuse vermieden, sodass eine Sicherheit erhöht ist. Insbesondere ist das Gehäuse mit Ausnahme der Folie vergleichsweise robust ausgestaltet und vorzugsweise aus einem Kunststoff gefertigt.

In dem Gehäuse ist eine Leiterplatte angeordnet, die beispielsweise aus einem glasfaserverstärkten Epoxidharz gefertigt ist. Mittels der Leiterplatte werden einige, vorzugsweise etwaige elektrische/elektronische Bauteile der Radarsensoreinheit zueinander stabilisiert, was eine Robustheit erhöht. Mit anderen Worten dient die Leiterplatte der Bereitstellung einer Schaltung, mittels derer die Funktion der Radarsensoreinheit realisiert wird.

Die Radarsensoreinheit umfasst eine Radarantenne, die dem Aussenden und/oder Empfangen der Radarwellen dient. Beispielsweise sind zwei Radarantennen vorgesehen, wobei eine dem Aussenden und die andere dem Empfangen der Radarwellen dient. Alternativ hierzu ist lediglich eine einzige Radarantenne vorhanden, die zeitlich abwechselnd entweder lediglich für den Empfang oder das Aussenden der Radarwellen betrieben wird. In einer weiteren Alternative sind mehrere Radarantennen vorhanden, wobei zumindest ein Teil davon zeitlich abwechselnd sowohl als zum Senden als auch zum Empfangen der Radarwellen verwendet wird.

Die Radarantenne ist auf der dem Klappenkörper gegenüberliegenden Seiten an der Leiterplatte angebunden, insbesondere angelötet. Auf diese Weise wird das Abstrahlen/Empfangen der Radarwellen durch die Leiterplatte selbst nicht behindert, sodass ein Betrieb verbessert ist. Auch ist es möglich, mittels der Leiterplatte, insbesondere mittels einer oder mehrerer Leiterbahnen der Leiterplatte, die Radarwellen geeignet zu lenken, sodass eine Abstrahlung verbessert ist.

Die Radarantenne ist ein Bestandteil eines Radarsensorchips, der somit eine Schaltung aufweist und insbesondere als integrierter Schaltkreis ausgestaltet ist. Somit befindet sich der Radarsensorchip auf der gleichen Seite der Leiterplatte wie die Radarantenne, also auf der dem Klappenkörper gegenüberliegenden Seite. Vorzugsweise bildet die Antenne das der Leiterplatte gegenüberliegenden Ende des Radarsensorchips. Mittels des Radarsensorchips erfolgt bei Betrieb eine Ansteuerung der Radarantenne und/oder eine Auswertung der mittels der Radarantenne erfassten Radarwellen. Mit anderen Worten ist die Radarantenne als sogenannte "Antenna on Package" ausgestaltet. Somit ist mittels des Radarsensorchips im Wesentlichen die Hauptfunktion der Radarsensoreinheit bereitgestellt, weswegen eine Montage vereinfacht ist. Auch ist es möglich, die Radarsensoreinheit vergleichsweise platzsparend aufzubauen. Ferner ist eine Anzahl an einzelnen Bauteilen reduziert, sodass eine Lagerhaltung vereinfacht ist. Der Radarsensorchip ist vorzugsweise mittels Oberflächenmontagetechnik (SMT) an der Leiterplatte montiert und weist beispielsweise ein sogenanntes BGA ("ball grid array") auf. Auf diese Weise ist eine Montage weiter vereinfacht.

Beispielsweise sind an der Leiterplatte noch weitere Bauteile angebunden, vorzugsweise angelötet. Die weiteren Bauteile sind insbesondere elektrische und/oder elektronische Bauteile und dienen dem Betrieb der Radarsensoreinheit, beispielsweise der Stromversorgung und/oder Kommunikation. Zum Beispiel sind die weiteren Bauteile auf der gleichen Seite der Leiterplatte wie der Radarsensorchips angeordnet. Daher ist es möglich, die Leiterplatte lediglich einseitig zu bestücken, was eine Herstellung vereinfacht. Alternativ sind die weiteren Bauteile willkürlich auf beiden Seiten der Leiterplatte angeordnet. Auf diese Weise ist es möglich, eine Leiterplatte mit vergleichsweise geringen Abmessungen zu wählen.

Besonders bevorzugt jedoch sind die weiteren Bauteile auf der dem Klappenkörper zugewandten Seite der Leiterplatte angeordnet. Somit wird mittels dieser weiteren Bauteile ein Betrieb des Radarsensorchips und der Radarantenne nicht beeinträchtigt. An der Leiterplatte sind auf der Seite der Radarantenne lediglich derartige weitere Bauteile angebunden, die eine geringere Höhe als der Radarsensorchip aufweisen, also eine geringere Ausdehnung senkrecht zur Leiterplatte als der Radarsensorchip. Folglich ist der Radarsensorchip das höchstbauende Teil, das auf dieser Seite der Leiterplatte angebunden ist. Infolgedessen werden bei Betrieb die mittels des Radarsensorchips ausgesandte und empfangenen Radarwellen im Wesentlichen nicht von den weiteren Bauteilen beeinflusst, da mittels dieser ein von der Leiterplatte weg gerichteter Bereich überwacht wird. Auch erfolgt keine Beeinflussung der Bauteile durch die Radarwellen, sodass kein Absorber zwischen diesen und der Radarantenne erforderlich ist, um die Bauteile vor den Radarwellen zu schützen. Somit ist einerseits ein Platzbedarf verringert. Andererseits sind Herstellungskosten reduziert.

Nachfolgend werden Ausführungsbeispiele der Erfindung anhand einer Zeichnung näher erläutert. Darin zeigen:
- Fig. 1: schematisch ein Kraftfahrzeug mit einer Klappe, die einen Klappenkörper und eine Zierleiste aufweist,
- Fig. 2: in einer Schnittdarstellung die Klappe mit der Zierleiste, von der ein Radarsensoreinheit aufgenommen ist,
- Fig. 3: in einer Schnittdarstellung die Radarsensoreinheit, und
- Fig. 4: gemäß Fig. 3 eine alternative Ausführungsform der Radarsensoreinheit.

Einander entsprechende Teile sind in allen Figuren mit den gleichen Bezugszeichen versehen.

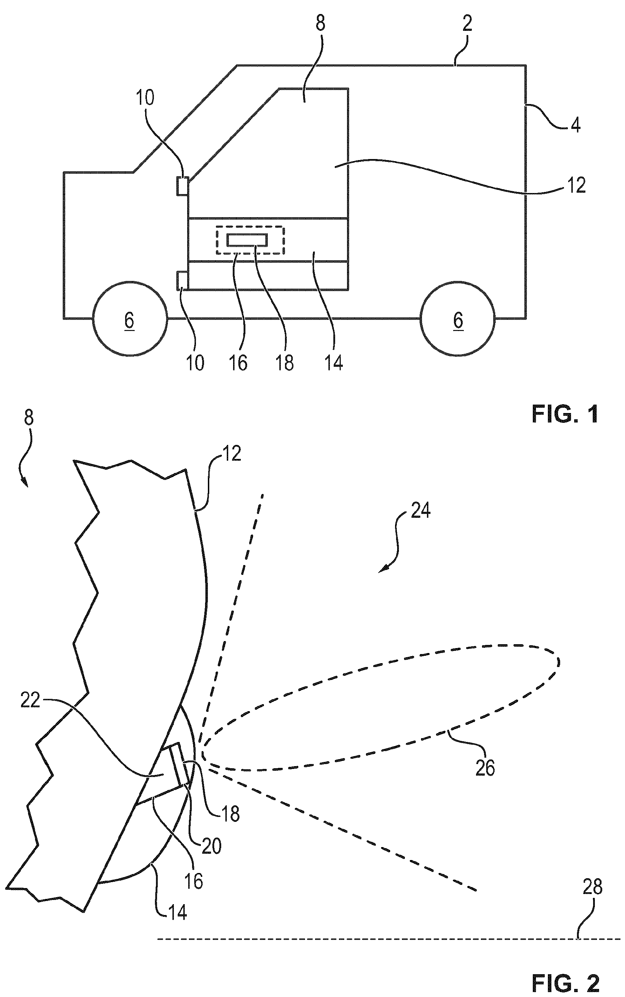

In Figur 1 ist schematisch vereinfacht ein Kraftfahrzeug 2 in Form eines Personenkraftwagens (Pkw) dargestellt. Das Kraftfahrzeug 2 weist einen Karoserie 4 auf, die mittels eines nicht näher dargestellten Fahrwerks mit vier Rädern 6 verbunden ist, von denen zwei dargestellt sind. Mittels der Räder 6 erfolgt ein Kontakt zu einer nicht näher dargestellten Fahrbahn. Die Karosserie 4 ist aus einem Metall erstellt und weist mehrere, nicht dargestellte Öffnungen auf. Die Öffnungen sind jeweils mittels einer Klappe 8 verschlossen die mittels entsprechender Lagerungen 10, hier in Form von Scharnieren, an der Karosserie 4 beweglich gelagert ist. Somit ist es möglich, die jeweilige Klappe 8 bezüglich der Karosserie 4 zu verschwenken und somit die Öffnung der Karosserie 4 freizugeben oder zu verschließen. Die hier dargestellt Klappe 8 ist eine Seitentür des Kraftfahrzeugs 2.

Die Klappe 8 umfasst einen Klappenkörper 12, der mittels der Lagerung 10 an der Karosserie 4 schwenkbar befestigt ist. Der Klappenkörper 12 ist in diesem Fall teilweise aus einem Metall erstellt und zumindest teilweise mittels einer nicht näher dargestellten Fensterscheibe gebildet. Außenseitig an dem Klappenkörper 12 ist eine aus einem elastischen Kunststoff gefertigte Zierleiste 14 angebunden und dort lösbar mittels Clipsen befestigt. Somit ist ein Austausch der Zierleiste 14 ermöglicht. Die Zierleiste 14 und der Klappenkörper 12 sind in der gleichen Farbe lackiert, sodass kein farblicher Unterschied zwischen diesen vorhanden ist.

Die Zierleiste 14, die auch als Tür-Paneele ausgestaltet sein kann, dient der Verhinderung einer Berührung eines Hindernisses, wie beispielsweise eines Postens, durch den Klappenkörper 12, wenn dieser bezüglich der Karosserie 4 verschwenkt wird und sich das Hindernis im Verschwenkbereich des Klappenkörpers 12 befindet. Da die Zierleiste 14 aus einem Kunststoff erstellt ist, ist eine Elastizität vorhanden, weswegen keine oder lediglich eine vergleichsweise geringe Beschädigung auftritt. Dabei wird aber eine Korrosion des Klappenkörpers 12 und somit Folgeschäden verhindert.

Wie in der Figur 2 in einer ausschnittsweise Schnittdarstellung der Klappe 8 gezeigt, weist die Zierleiste 14 eine zu dem Klappenkörper 12 gerichteten Aussparung 16 auf, die topfförmig ausgestaltet ist. Die Aussparung 16 ist dabei im Montagezustand nicht wahrnehmbar. Innerhalb der Aussparung 16 ist eine Radarsensoreinheit 18 aufgenommen, die ein Gehäuse 20 aufweist, das die äußere Begrenzung der Radarsensoreinheit 18 darstellt. Hierbei ist das Gehäuse 20 bezüglich des Klappenkörpers 12 im Bereich der Zierleiste 14 geneigt. Mit anderen Worten schließt das Gehäuse 20 und der Bereich des Klappenkörpers 12, an dem die Zierleiste 14 befestigt ist, einen Winkel ein, der verschieden von 0° und insbesondere größer als 10° ist.

Zur Stabilisierung des Gehäuses 20 in der Aussparung 16 ist diese nach Einsetzen des Gehäuses 20 mit einem Vergussmasse 22 gefüllt, die ein Kunststoff ist. Somit ist das Gehäuse 20 mit der Zierleiste 14 vergossen, und die Radarsensoreinheit 18 ist von der Zierleiste 14 aufgenommen. In einer Alternative ist das Gehäuse 20 mit der Zierleiste 14 verclipst. Hierfür weisen die Aussparung 16 und das Gehäuse 20 nicht gezeigte, zueinander korrespondierende Clipse auf.

Die Radarsensoreinheit 18 dient der Überwachung einer Umgebung um das Kraftfahrzeug 2 herum auf etwaige Hindernisse. Hierfür werden bei Betrieb mittels der Radarsensoreinheit 18 Radarwellen ausgesandt, die an einem etwaigen Hindernis reflektiert und/oder gestreut werden. Die auf diese Weise umgelenkten Radarwellen treffen teilweise zurück auf die Radarsensoreinheit 18, sodass diese mittels der Radarsensoreinheit 18 erfasst werden können. Anhand der hierfür benötigten Laufzeit und/oder einer Änderung der Signalform wird dabei auf den Abstand und/oder die Position des Hindernisses geschlossen.

Hierbei wird mittels der Radarsensoreinheit 18 Radarwellen in einen überwachten Bereich 24 abgegeben, und Radarwellen können empfangen werden, wenn diese aus dem überwachten Bereich 24 auf die Radarsensoreinheit 18 treffen. Im Zentrum des überwachten Bereich 24 befinden sich dabei die Hauptkeule 26, in dem das Maximum der Intensität der abgegebenen Radarwellen liegt. Da das Gehäuse 20 bezüglich des Klappenkörpers 12 geneigt ist und die Hauptkeule 26 senkrecht zu der dem Klappenkörper 12 abgewandten Seite des im Wesentlichen rechteckförmigen Gehäuses 20 angeordnet ist, ist die Hauptkeule 26 bezüglich einer Horizontalen 24 vertikal nach oben verkippt, sodass nicht lediglich ein Boden um das Kraftfahrzeug 2 herum mittels der Radar Sensoreinheit 18 überwacht wird. Bei der hier dargestellten Variante weist der mittels des Radarsensoreinheit 18 überwachte Bereich 26 einen Raumwinkel von über 90° auf, wobei die Hauptkeule 26 bezüglich der Horizontalen 24 einen Winkel von im Wesentlichen 10° einschließt.

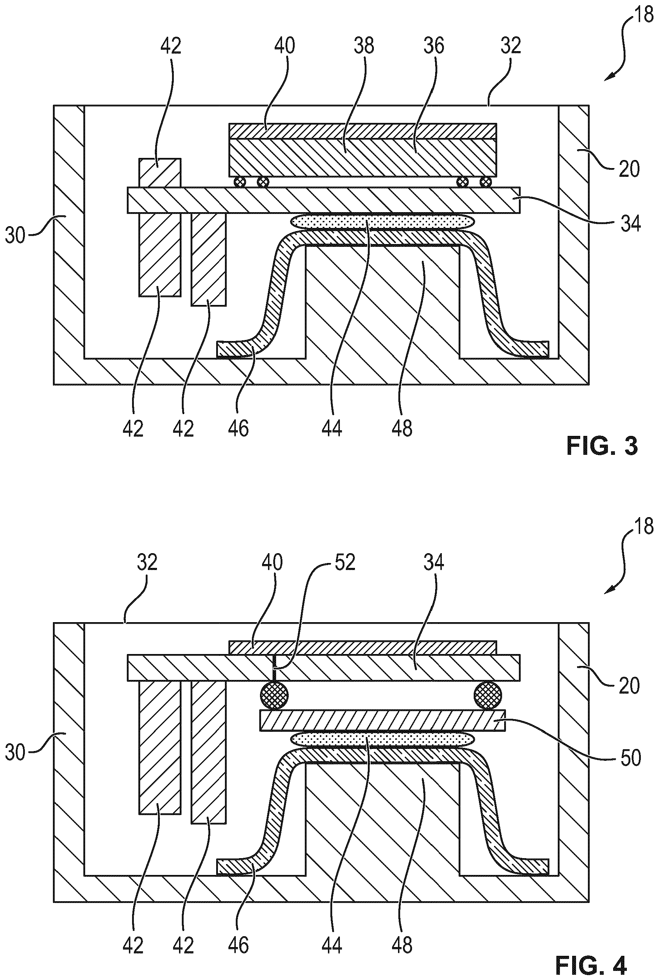

In Figur 3 ist eine erste Variante der Radarsensoreinheit 18 in einem Querschnitt dargestellt. Das Gehäuse 20 weist einen schalenförmigen Grundkörper 30 auf, der aus einem Kunststoff gefertigt ist. Der Grundkörper 30 ist auf der verbleibenden Seite mittels einer Folie 32 abgedeckt, sodass diese Seite des Gehäuses 20 mittels der Folie 32 gebildet ist. Im Montagezustand ist das Gehäuse 20 derart positioniert, dass die Folie 32 sich auf der dem Klappenkörper 12 abgewandten Seite positioniert befindet. Die Folie 32 ist der senkrecht zu der Hauptkeule 26 ausgerichtet. Somit treten bei Betrieb die mittels der Radarsensoreinheit 18 abgegebenen Radarwellen nicht durch den Grundkörper 30, sondern lediglich durch die Folie 32, sodass im Wesentlichen keine Abschwächung oder Interaktion des Gehäuses 20 mit den Radarwellen erfolgt.

Aufgrund der Folie 32 sind die Außenabmessungen des Gehäuses 20 vergleichsweise gering, wobei dennoch ein Eindringen von Partikeln in das Gehäuse 20 vor der Montage in der Zierleiste 14 vermieden ist. Wenn das Gehäuse 20 in der Aussparung 16 montiert ist, erfolgt anschließend der Verschluss mittels der Vergussmasse 22, sodass die in dem Gehäuse 20 angeordneten Bestandteile der Radarsensoreinheit 18 auch vor einer übermäßigen mechanischen Einwirkung geschützt sind.

Innerhalb des Gehäuses 20 ist eine Leiterplatte 34 angeordnet, die aus einem glasfaserverstärkten Epoxidharz gefertigt ist. Die Leiterplatte 34 ist parallel zur Folie 32 angeordnet, und auf deren der Folie 32 zugewandten Seite ist ein Radarsensorchip 36 befestigt, dessen Gehäuseform ein BGA ("Ball Grid Array") ist. Der Radarsensorchip 36 umfasst eine integrierte Schaltung 38 sowie eine Radarantenne 40, wobei sich die integrierte Schaltung 38 zwischen der Radarantenne 40 und der Leiterplatte 34 befindet. Die integrierte Schaltung 40 dient der Ansteuerung der Radarantenne 40, sodass die Radarwellen abgegeben werden. Auch werden mittels der integrierten Schaltung 38 die mittels der Radarantenne 40 erfassten Radarwellen ausgewertet. In einer bevorzugten Weiterbildung wird mit der integrierten Schaltung 38 auch eine Bewertung der empfangenen Radarwellen durchgeführt, sodass mittels dieser die Position und/oder der Abstand des etwaigen Hindernisses ermittelt wird.

Zusammenfassend ist die Radarantenne 40 ein Bestandteil des Radarsensorchips 36, und die Radarantenne 36 ist an der dem Klappenkörper 12 gegenüberliegenden Seite der Leiterplatte 34 angeordnet. Insbesondere ist hierbei zwischen der integrierten Schaltung 38 und der Radarantenne 40 ein nicht näher dargestellter Absorber angeordnet, oder die Radarantenne 40 ist derart ausgebildet, dass keine oder lediglich eine vergleichsweise geringe Menge der mittels der Radarantenne 40 abgegebenen Radarwellen in die integrierte Schaltung 38 eindringt. Somit ist eine Betriebssicherheit erhöht.

An der Leiterplatte 34 sind weitere elektrische und/oder elektronische Bauteile 42 angebunden. Die Bauteile 42 sind beispielsweise Kondensatoren, Widerstände oder Chips. Hierbei befinden sich auf der Seite des Radarsensorchips 36 lediglich derartige Bauteile 42, die eine geringere Höhe als der Radarsensorchip 30 aufweisen, also deren maximale Abstand zu der Leiterplatte 34 geringer als der Abstand der Radarantenne 40 zu der Leiterplatte 34 ist. Somit werden diese (weiteren) Bauteile 42 von den mittels der Radarantenne 40 abgegebenen Radarwellen nicht bestrahlt, weswegen kein Absorber zwischen diesen und dem Radarsensorchips 36 erforderlich ist um eine Funktionssicherheit der Bauteile 42 zu gewährleisten. Infolgedessen ist ein Gewicht und eine Größe der Radarsensoreinheit 18 verringert.

Die Bauteile 42, die eine größere Höhe aufweisen, befinden sich auf der dem Radarsensorchip 36 gegenüberliegenden Seite, also auf der dem Klappenkörper 12 zugewandten Seite. Auf dieser Seite ist ferner über eine Wärmeleitpaste 44 ein U-förmiger Kühlkörper 46 flächig angebunden, der aus einem Metall gefertigt ist. Der Grundkörper 32 weist innenseitig ein Podest 48 auf, auf dem der Kühlkörper 46 aufsitzt, und mittels dessen der Kühlkörper 46 gegen die Leiterplatte 34 gedrückt wird, sodass eine sichere thermische Kontaktierung vorliegt.

In Figur 4 ist eine Abwandlung der Radarsensoreinheit 18 dargestellt. Hierbei ist das Gehäuse 20 mit dem Grundkörper 30 und der Folie 32 sowie dem Podest 48 nicht verändert. Auch ist wiederum die Leiterplatte 34 vorhanden, die parallel zu der Folie 32 angeordnet ist. Anstatt des Radarsensorchips 36 ist jedoch die Radarantenne 40 mittels eines separaten Bauteils erstellt, wie einer Leiterbahn der Leiterplatte 34. Die Radarantenne 40 befindet wiederum auf der der Folie 32 zugewandten und somit dem Klappenkörper 12 abgewandten Seite der Leiterplatte 34.

Der Betrieb der Radarantenne 40 erfolgt mittels eines Steuerchip 50, der als Bauform wieder ein BGA aufweist, und der die gleichen Aufgaben wie die integrierte Schaltung 38 aus der vorhergehenden Ausführungsform übernimmt. Jedoch sind der Steuerchip 50 und die Radarantenne 40 zueinander baulich getrennt, und der Steuerchip 50 befindet sich auf der dem Klappenkörper 12 zugewandten Seite der Leiterplatte 34, sodass zwischen der Radarantenne 40 und dem Steuerchip 50 die Leiterplatte 34 angeordnet ist. Mittels einer Durchkontaktierung 52 sind die Radarantenne 40 und der Steuerchip 50 signaltechnisch und elektrisch miteinander verbunden. Hierbei überdecken sich die Projektionen der Radarantenne 40 und des Steuerchip 50 auf die Leiterplatte gegenseitig, sodass die signaltechnische Verbindung zwischen diesen vergleichsweise kurz ist.

Der Steuerchip 50 ist über die Wärmeleitpaste 44 thermisch mit dem Kühlkörper 46 kontaktiert, der wiederum mittels des Podest 48 stabilisiert wird. Die Radarsensoreinheit 18 weist wiederum die weiteren Bauteilen 42 auf, wobei sich sämtliche Bauteil 42 auf der Seite des Steuerchip 50 bezüglich der Leiterplatte 34 befinden. Somit ist eine Beeinflussung dieser durch die Radarwellen im Wesentlichen ausgeschlossen oder wird mittels der Leiterplatte 34 zumindest verringert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Der Schutzbereich der Erfindung wird durch die Patentansprüche bestimmt.

### Bezugszeichenliste

- 2: Kraftfahrzeug
- 4: Karosserie
- 6: Rad
- 8: Klappe
- 10: Lagerung
- 12: Klappenkörper
- 14: Zierleiste
- 16: Aussparung
- 18: Radarsensoreinheit
- 20: Gehäuse
- 22: Vergussmasse
- 24: überwachter Bereich
- 26: Hauptkeule
- 28: Horizontale
- 30: Grundkörper
- 32: Folie
- 34: Leiterplatte
- 36: Radarsensorchip
- 38: integrierte Schaltung
- 40: Radarantenne
- 42: Bauteil
- 44: Wärmeleitpaste
- 46: Kühlkörper
- 48: Podest
- 50: Steuerchip
- 52: Durchkontaktierung

## Patentansprüche

1. Klappe (8) eines Kraftfahrzeugs (2), mit einem Klappenkörper (12), an dem außenseitig eine Zierleiste (14) angebunden ist, wobei von der Zierleiste (14) eine Radarsensoreinheit (18) mit einem Gehäuse (20) aufgenommen ist, wobei in dem Gehäuse (20) eine Leiterplatte (34) angeordnet ist, wobei an der dem Klappenkörper (12) gegenüberliegenden Seite der Leiterplatte (34) eine Radarantenne (40) angebunden ist, und wobei die Radarantenne (40) ein Bestandteil eines Radarsensorchips (36) ist,
**dadurch gekennzeichnet,**
**dass** auf der Seite der Radarantenne (40) an der Leiterplatte (34) lediglich Bauteile (42) angebunden sind, die eine geringere Höhe als der Radarsensorchip (36) aufweisen.

2. Klappe (8) nach Anspruch 1,
**dadurch gekennzeichnet,**
**dass** das Gehäuse (20) mit der Zierleiste (14) verclipst ist.

3. Klappe (8) nach Anspruch 1,
**dadurch gekennzeichnet,**
**dass** das Gehäuse (20) mit der Zierleiste (14) vergossen ist.

4. Klappe (8) nach einem der Ansprüche 1 bis 3,
**dadurch gekennzeichnet,**
**dass** das Gehäuse (20) bezüglich des Klappenkörpers (12) im Bereich der Zierleiste (14) geneigt ist.

5. Klappe (8) nach einem der Ansprüche 1 bis 4,
**dadurch gekennzeichnet,**
**dass** das Gehäuse (20) auf der dem Klappenkörper (12) abgewandten Seite mittels einer Folie (32) gebildet ist.

## Claims

1. Flap (8) of a motor vehicle (2), having a flap body (12) to which a trim strip (14) is attached at the outer side, wherein a radar-sensor unit (18) with a housing (20) is accommodated by the trim strip (14), wherein a printed circuit board (34) is arranged in the housing (20), wherein a radar antenna (40) is attached to that side of the printed circuit board (34) which is situated opposite the flap body (12), and wherein the radar antenna (40) is a constituent part of a radar-sensor chip (36),
**characterized**
**in that**, on the side of the radar antenna (40), only components (42) having a smaller height than the radar-sensor chip (36) are attached to the printed circuit board (34).

2. Flap (8) according to Claim 1,
**characterized**
**in that** the housing (20) is clipped to the trim strip (14).

3. Flap (8) according to Claim 1,
**characterized**
**in that** the housing (20) is moulded to the trim strip (14).

4. Flap (8) according to one of Claims 1 to 3,
**characterized**
**in that** the housing (20) is inclined in the region of the trim strip (14) in relation to the flap body (12).

5. Flap (8) according to one of Claims 1 to 4,
**characterized**
**in that**, on the side facing away from the flap body (12), the housing (20) is formed by means of a film (32).

## Revendications

1. Hayon (8) d'un véhicule automobile (2), comprenant un corps de hayon (12) auquel une moulure (14) est rattachée côté extérieur, dans lequel la moulure (14) reçoit une unité de capteur radar (18) pourvue d'un boîtier (20), dans lequel une carte de circuits imprimés (34) est disposée dans le boîtier (20), dans lequel une antenne radar (40) est rattachée à la face de la carte de circuits imprimés (34) opposée au corps de hayon (12), et dans lequel l'antenne radar (40) fait partie d'une puce de capteur radar (36),
**caractérisé**
**en ce que** du côté de l'antenne radar (40), seuls des composants (42) qui présentent une hauteur inférieure à la puce de capteur radar (36) sont rattachés à la carte de circuits imprimés (34).

2. Hayon (8) selon la revendication 1,
**caractérisé**
**en ce que** le boîtier (20) est enclenché avec la moulure (14).

3. Hayon (8) selon la revendication 1,
**caractérisé**
**en ce que** le boîtier (20) est moulé avec la moulure (14).

4. Hayon (8) selon l'une quelconque des revendications 1 à 3,
**caractérisé**
**en ce que** le boîtier (20) est incliné par rapport au corps de hayon (12) au niveau de la moulure (14).

5. Hayon (8) selon l'une quelconque des revendications 1 à 4,
**caractérisé**
**en ce que** le boîtier (20) est formé au moyen d'un film (32) sur le côté détourné du corps de hayon (12).
